# EUROPEAN PATENT SPECIFICATION

(11) **EP 1 697 161 B1**
(45) Date of publication and mention of the grant of the patent: **17.06.2009**
(21) Application number: 04779915.0
(22) Date of filing: 02.08.2004
(51) Int. Cl.: B60N 2/06, B60N 2/20, B60N 2/30, B60N 2/015

(54) **VEHICLE SEAT ASSEMBLY AND FLOOR RAIL FOR LATERAL SEAT SHUTTLING**
FAHRZEUGSITZANORDNUNG UND BODENSCHIENE FÜR LATERALES HIN- UND HERBEWEGEN EINES SITZES
ENSEMBLE SIEGE DE VEHICULE ET RAIL DE PLANCHER DESTINE AU COULISSEMENT LATERAL DU SIEGE

(30) Priority: 01.08.2003 US 491887 P
(43) Date of publication of application: 06.09.2006
(73) Proprietor: Intier Automotive Inc., New Market, Ontario L3Y 4X7 (CA)
(72) Inventor: PATHAK, Shriram Shivanand, Farmington, MI 48335 (US); KOSINSKI, Frederick, Michael, Royal Oak, MI 48073 (US); TOKARZ, Stephen, New Boston, MI 48164 (US)
(74) Representative: Hössle, Markus
(86) International application number: PCT/US2004/024993
(87) International publication number: WO 2005/012030

(56) References cited:
- EP-A- 0 940 288
- EP-A- 0 970 844
- EP-A- 1 329 355
- FR-A- 2 645 810
- FR-A- 2 735 081
- US-B1- 6 213 525
- US-B1- 6 270 140
- US-B1- 6 648 393

## Description

### BACKGROUND OF THE INVENTION

### 1. Field of the Invention

The invention relates to a seat assembly for an automotive vehicle. More particularly, this invention relates to a riser assembly that allows the seat assembly to move laterally within the vehicle, pivot to an upright tumbled position or be released and removed from the vehicle.

### 2. Description of the Related Art

Automotive vehicles include seat assemblies for supporting occupants within the vehicle. Seat assemblies generally include a seat cushion and a seat back operatively coupled to the seat cushion by a recliner mechanism for allowing selective pivotal adjustment of the seat back relative to the seat cushion between a plurality of reclined seating positions. The seat back is also typically movable between any one of the reclined seating positions and a generally horizontal, forwardly folded position overlying the seat cushion to present a load floor surface on the back of the seat back.

It is known in the automotive seating art to mount a riser assembly between the seat cushion and the floor of the vehicle for moving the seat assembly between a seating position with the seat cushion spaced above the floor of the vehicle and a tumbled position with the seat back in the forwardly folded position and the seat cushion pivoted forwardly to an upright position to provide addition storage space behind the seat assembly within the vehicle. However, it remains desirable to provide a seat assembly which is movable between each of the seating position, forwardly folded position and tumbled position while also being movable laterally within the vehicle to provide for a variety of seating positions and also completely removable from the vehicle to maximize storage space therein.
Document EP 0 940 288 A2 (corresponding to the preamble of claim 1) discloses a seat device of a vehicle including a substantially flat floor surface substantially extending across a full cabin space of the vehicle, front row seats, center row seats and a rear row seat disposed in a longitudinal direction of the vehicle on the floor surface, a seat storage pan extending rearward the rear row seat and downward a level of the floor surface, the front row seats being disposed with a space, the center row seats including a plurality of seats in which at least one of the seats is movable in a lateral direction of the vehicle. When the rear row seat is received in the seat storage pan, a substantially flat and continuous surface of a substantially same level as the floor surface is formed rearward the center row seats to a rear end of the cabin space with a substantially full width of the cabin space. When the center row seats are disposed offset to one side of the vehicle with regard to the lateral direction, a substantially flat and continuous surface of a substantially same level as the floor surface is formed rearward the front row seats to a rear end of the cabin space. When the center row seats are disposed to produce a space at a central portion of the vehicle in the lateral direction, a substantially flat and continuous surface of a substantially same level as the floor surface is formed rearward the front row seats to a rear end of the cabin space at a central portion of the cabin space in the lateral direction.

### SUMMARY OF THE INVENTION

According to the invention, which is defined in claim 1, there is provided, a riser assembly for selectively coupling a seat assembly to a front slide rail and rear slide rail on the floor of an automotive vehicle. The riser assembly includes a front latch mechanism adapted to be operatively coupled to the front slide rail. The front latch mechanism has a support plate for supporting the riser assembly on the front slide rail. A rear latch mechanism is adapted to be operatively coupled to the rear slide rail. The rear latch mechanism has a mounting plate for supporting the riser assembly on the rear slide rail and a pair of opposing front and rear latch plates for selectively engaging and securing the rear latch mechanism to the rear slide rail. A release cam member is operatively coupled between the front and rear latch plates for simultaneously engaging and releasing the front and rear latch plates from engagement with the rear slide rail to selectively couple the riser assembly to the front and rear slide rails. Further features of the invention are disclosed in the dependent claims.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a front perspective view of the seat assembly according to the preferred embodiment of the invention in a seating position;;
Figure 2 is a front perspective view of the seat assembly with the seat back in a forwardly folded position;
Figure 3 is a front perspective view of the seat assembly in a tumbled position;
Figure 4 is an enlarged perspective view of a front latch mechanism;
Figure 5 is an enlarged perspective view of a rear latch mechanism;
Figure 6 is a side view of the riser assembly and front and rear latch mechanisms;
Figure 7 is a side view of an alternative embodiment of the riser assembly of the present invention; and
Figure 8 is a side view of a second alternative embodiment of the riser assembly of the present invention.

### DETAILED DESCRIPTION OF THE PREFERRED EMBODIMENT

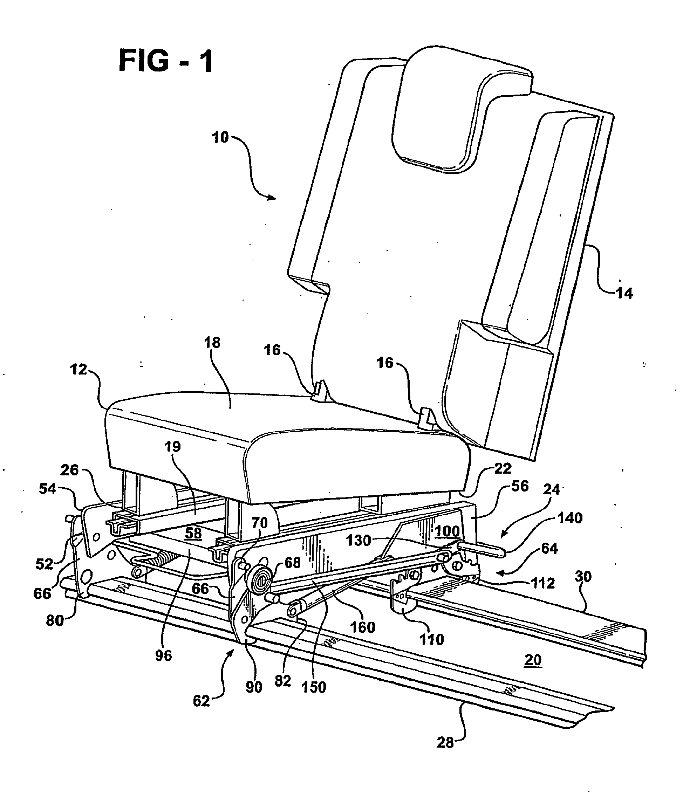

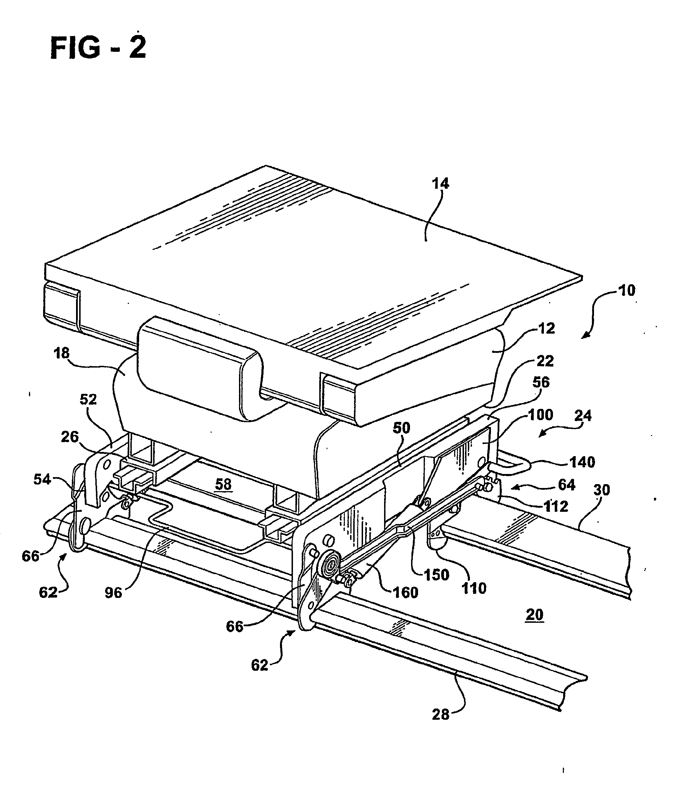

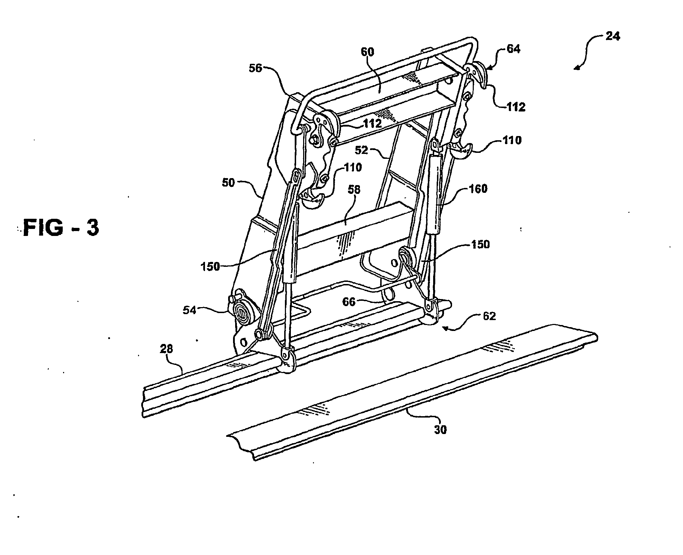

Referring to Figure 1, a seat assembly 10 for an automotive vehicle is shown in a seating position. The seat assembly 10 includes a generally horizontal seat cushion 12 and a generally upright seat back 14. The seat back 14 is pivotally coupled to the seat cushion 12 by a pair of spaced apart recliner mechanisms 16, as are commonly known to one skilled in the art. The recliner mechanisms 16 provide pivotal adjustment or movement of the seat back 14 relative to the seat cushion 12 between the generally upright seating position, as shown in Figure 1, and a forwardly folded position overlying the seat cushion 12, as shown in Figure 2. The seat cushion 12 extends between an upper surface 18 for supporting an occupant above a floor 20 in the vehicle and an opposite bottom surface 22. The seat assembly 10 further includes a riser assembly 24 extending between the bottom surface 22 of the seat cushion 12 and the floor 20 of the vehicle. A track mechanism 26, as is commonly known to one skilled in the art, is coupled between the bottom surface 22 of the seat cushion 12 and the riser assembly 24 for allowing selective forward and rearward sliding adjustment of the seat cushion 12, and seat back 14, relative to the riser assembly 24. The riser assembly 24 allows selective positioning of the seat assembly 10 between a generally horizontal seating position, as shown in Figure 1, and a tumbled position, as shown in Figure 3. The riser assembly 24 also allows lateral displacement of the seat assembly 10 along the floor 20 of the vehicle as will be further discussed herein below.

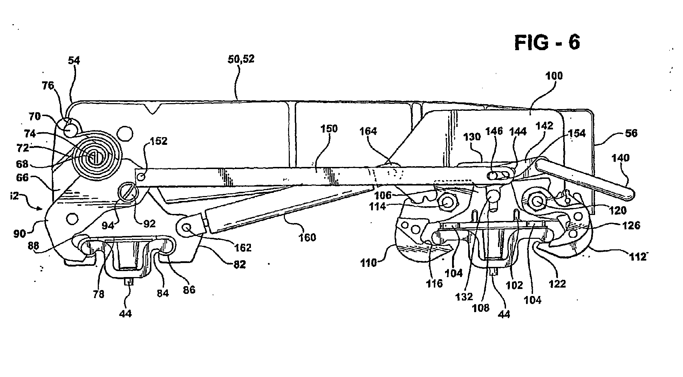

Referring to Figures 1, 4, and 5, a front 28 and rear 30 slide rail extend laterally across the floor 20 of the vehicle for supporting and positioning the seat assembly 10 therealong. Each of the slide rails 28, 30 comprise a generally U-shaped base member 32 defining an open center channel portion 34 and having horizontal flanges 36 extending laterally outwardly from each side of the U-shaped base member 32. The flanges 36 have an arcuate shape with a flat upper portion 38 and a bulbous portion 40 on the distal end of the flange 36. A filet 42 is positioned on the upper portion 38 of each flange 36 covering the channel portion 34 of the U-shaped base member 32. Finally, a plurality of fasteners 44, as shown in Figure 6, are positioned within the channel portion 34 and extend through the bottom of the U-shaped base member 32 to fixedly secure the slide rails 28, 30 to the floor 20 of the vehicle.

Referring to Figure 3, the riser assembly 24 includes generally parallel and spaced apart first 50 and second 52 side members extending between front 54 and rear 56 ends. A front cross member 58 extends transversely between and interconnects the side members 50, 52 adjacent the front ends 54. Similarly, a rear cross member 60 extends transversely between and interconnects the side members 50, 52 adjacent the rear ends 56.

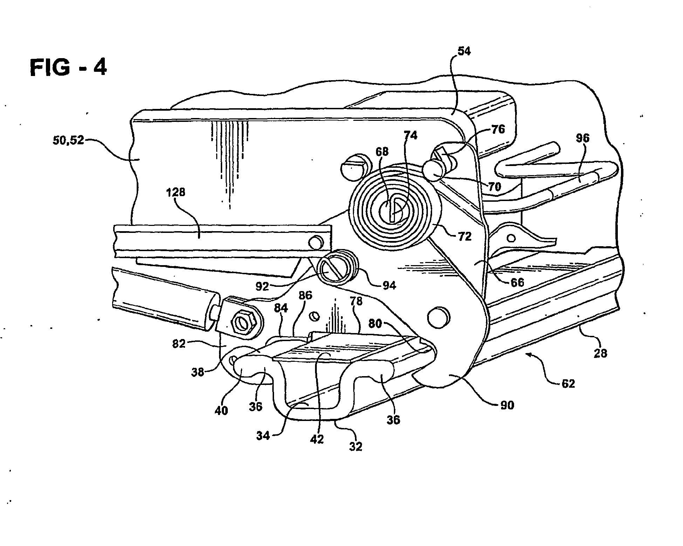

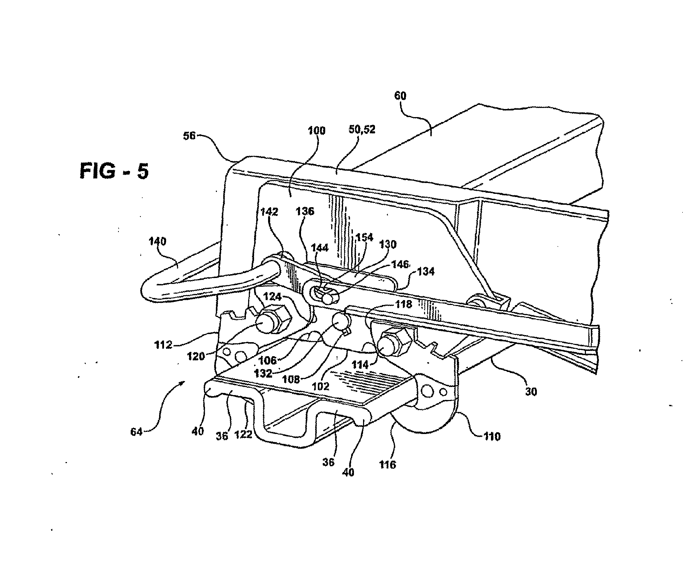

Referring to Figures 4 and 5, the riser assembly 24 includes a front latch mechanism 62 coupled to the front end 54 of each side member 50, 52 and a rear latch mechanism 64 coupled to the rear end 56 of each side member 50, 52. For simplicity only one of the front latch mechanisms 62 and rear latch mechanisms 64 will be described in detailed, while appreciating that the mechanisms 62, 64 are the same on each side member 50, 52 of the riser assembly 24.

Referring to Figure 4, the front latch mechanism 62 includes a support plate 66 having an upper end pivotally connected to the front end 54 of the side member 50, 52 by pivot pin 68 for supporting the seat assembly 10 during pivotal movement about the front latch mechanism 62 between the seating position and the tumbled position. A support post 70 is mounted to the support plate 66 for supporting and mounting a biasing member 72, such as a clock spring. The biasing member 72 is coiled around the pivot pin 68 and has a first free end 74 coupled to the pivot pin 68 and a second free end 76 coupled to the support post 70 for biasing the seat assembly 10 to the tumbled position.

The support plate 66 includes a slot 78 spanning between the width of the front slide rail 28 and extending between a front leg portion 80, shown in Figures 1 and 4, and a rear leg portion 82, shown in Figures 4 and 6, for slidably supporting the front of the riser assembly 24 along the front slide rail 28. The rear leg portion 82 forms a U-shaped hook opening 84 for receiving the bulbous portion 40 of the rear flange 36 therein. An isolator or insert 86 is secured to the rear leg portion 82 within the U-shaped hook opening 86 for engaging with the bulbous portion 40 of the slide rail 28 to reduce vibrations therebetween which cause buzz, squeaks, and rattles (BSR). The isolator 86 is preferably a plastic material that reduces friction between the rear leg portion 82 and the slide rail 28 to reduce sliding efforts of the seat assembly 10 along the slide rail 28 and to reduce the vibrations thererbetween. Similarly, a slide or insert 88, shown in Figure 6, is secured to the support plate 66 along the slot 78 and adjacent the front leg portion 80 for engagement with the flat upper portion 38 of the slide rail 28. The slide 88 is also preferably a plastic material that reduces friction between the support plate 66 and the slide rail 28 and provides easy sliding movement of the support plate 66 therealong.

The front latch mechanism 62 further includes a latch plate 90 having an upper end pivotally connected to the support plate 66 by pivot pin 92 for pivotal movement into and out of latching engagement with the bulbous portion 40 of the front flange 36 on the slide rail 28. A biasing member 94, such as a clock spring, is coiled around the pivot pin 92 and has a first free end coupled to the pivot pin 92 and a second free end coupled to the support plate 66 for biasing the latch plate 90 into engagement with the slide rail 28.

Finally, a front release bar 96 is fixed secured to the latch plate 90 of each front latch mechanism 62 and extends between the side members 50, 52 to synchronously actuate the latch plates 90 into and out of latching engagement with the front flange 36 of the slide rail 28.

Referring to Figure 5, the rear latch mechanism 64 includes a mounting plate 100 fixedly secured to the outboard side of the side members 50, 52 and adjacent the rear ends 56 thereof. The mounting plate 100 extends below the side member 50, 52 terminating at a lower base plate 102 for engaging and supporting the rear of the riser assembly 24 on the rear slide rail 30. As shown in Figure 6, a pair of slides or inserts 104, similar to the slide 88, are spaced apart and secured to the lower base plate 102 for engaging each of the flat upper portions 38 of the flanges 36 on the rear slide rail 20. Again, the slides 104 are preferably a plastic material which reduces the friction between the lower base plate 102 and the rear slide rail 30 and provides easier sliding movement of the lower base plate 102 along the rear slide rail 30. The mounting plate 100 further includes a flange 106 extending upwardly from the lower base plate 102 and spaced parallel to the outboard side surface of the mounting plate 100 to define a channel therebetween. The flange 106 includes a U-shaped notch 108 formed therein.

The rear latch mechanism 64 further includes a front latch plate 110 and a rear latch plate 112 seated on opposing ends of the flange 106. The front latch plate 110 is pivotally connected to the mounting plate 100 by pivot shaft 114 and extends below the lower base plate 102 to a hook portion 116 for engaging the bulbous portion 40 of the front flange 36 on the rear slide rail 30. The front latch plate 110 further includes a cam surface 118 facing and adjacent to the forward edge of the flange 106 and seated in the space between the flange 106 and the outboard side surface of the mounting plate 100. The rear latch plate 112 similarly is pivotally connected to the mounting plate 100 by a pivot shaft 120 and extends below the lower base plate 102 to a hook portion 122 for engaging the bulbous portion 40 of the rear flange 36 of the rear slide rail 30. The rear latch plate 112 also includes a cam surface 124 facing and adjacent to the rearward edge of the flange 106 and seated in the space between the flange 106 and the outboard side surface of the mounting plate 100. Further, an anti-rattle latch 126, shown in Figure 6, is mounted by the pivot shaft 120 and overlaps the rear latch plate 112 to provide a secondary cinching hook around the bulbous portion 40 of the rear flange 36 to further secure the rear latch mechanism 64 to the rear slide rail 30.

The rear latch mechanism 64 further includes a triangular-shaped release cam member 130 seated in the space between the flange 106 and the outboard side surface of the mounting plate 100. A guide post 132 projects outwardly from the release cam member 130 into the U-shaped notch 108 formed in the flange 106 to slidably support and guide the release cam member 130 therealong. The release cam member 130 includes opposing front and rear cam surfaces 134, 136 for engaging with the respective cam surfaces 118, 124 on the front and rear latch plates 110, 112 to pivot the latch plates 110, 112 into and out of engagement with the flanges 36 of the rear slide rail 30.

The rear latch mechanism 64 further includes a rear release handle 140 extending between opposing side members 50, 52 and pivotally connected to the mounting plates 100. A release link 142 extends between a first end fixedly secured to the rear release handle 140 and a second end operatively coupled to the release cam member 130. The release link 142 includes an elongated slot 144 therein for slidably receiving a guide pin 146 projecting from the center of the release cam member 130. The sliding interaction between the guide pin 146 within the elongated slot 144 provides selective vertical movement of the release cam member 130 within the U-shaped notch 108 upon pivotal movement of the rear release handle 140 to simultaneously actuate the front and rear latch plates 110, 112 between engaged and disengaged position with the rear slide rail 30. More specifically, as the rear release handle 140 is pivoted upwardly, the release link 142 presses downwardly on the guide pin 146 seated within the slot 144 to force the release cam member 130 downwardly along the notch 108. The cam surfaces 134, 136, engaged with the respective cam surfaces 118, 124 of the front and rear latch plates 110, 112, force the latch plates 110, 112 to pivot about the pivot shafts 114, 120 to disengage from the flanges 36 of the rear slide rail 30.

Referring to Figures 5 and 6, the riser assembly 24 also includes a connecting link 150 extending longitudinally between a first end pivotally coupled to the latch plate 90 of the front latch mechanism 62 by pivot pin 152 and an opposite second end operatively coupled to the release cam member 130. More specifically, the opposite second end of the connecting link 150 includes an elongated lost motion slot 154 adjacent to and overlapping the elongated slot 144 in the release link 142 for receiving the guide pin 146 therein. As the rear release handle 140 is pivoted upwardly to release the rear latch mechanism 64, the guide pin 146 travels along the slot 154 until it pulls on the connecting link to simultaneously pivot the latch plate 90 and disengage the front latch mechanism 62 from the front slide rail 28.

Finally, referring again to Figure 6, the riser assembly 24 includes an assist member 160, such as a pressurized gas strut, extending between a first end pivotally coupled at 162 to the rear leg portion 82 of the support plate 66 and a second end pivotally coupled at 164 to the mounting plate 100. The assist member 160 assists in the lifting of the seat assembly 10 from the seating position to the tumbled position and assists in maintaining the seat assembly 10 biased into the tumbled position.

In operation, with the seat assembly 10 in the seating position shown in Figure 1, the riser assembly 24 is fixedly secured to the floor 20 of the vehicle by engagement of the front latch mechanism 62 with the front slide rail 28 and the rear latch mechanism 64 with the rear slide rail 30. The seat back 14 is secured in the upright seating position by the recliner mechanisms 16. The seat assembly 10 is prevented from lateral sliding movement along the front and rear slide rails 28, 30 by engagement of the rear leg portion 82 about the rear flange 36 and the latch plate 90 about the opposing front flange 36 of the front slide rail 28. The seat assembly is also prevented from lateral sliding movement by engagement of the front and rear latch plates 110, 112 about the opposing flanges 36 of the rear slide rail 30, as well as, the cinching of the anti-rattle latch 126 about the rear flange 36 of the rear slide rail 30.

The seat assembly 10 may be moved laterally along the front and rear slide rails 28, 30 and across the floor 20 of the vehicle in an almost infinite number of positions by the following operation. First, the seat back 14 may be either in the upright seating position, as shown in Figure 1, or the forwardly folded position, as shown in Figure 2. The operator pivots the rear release handle 140 upwardly to force the release link 142 downwardly. The release link 142 engages the guide pin 146 to force the release cam member 130 downwardly, guided by the post 132 within the U-shaped notch 108. The front and rear cam surfaces 134, 136 of the release cam member 130 engage the cam surfaces 118, 124 on the respective front and rear latch plates 110, 112 to pivot the latch plates 110, 112 and at least partially disengage the latch plates 110, 112 from the flanges 36 of the rear slide rail 30. Simultaneously, the guide pin 146 travels along the slot 154 to pull the connecting link 150 rearwardly and pivot the latch plate 90 about the pivot pin 92. The latch plate 90 is also at least partially disengaged from the flange 36 of the front slide rail 28. While holding the rear release handle 140, the seat assembly 10 may now be moved laterally along the slide rails 28, 30 with the slides 88, 104 providing low frictional sliding contact between the front latch mechanism 62 and front slide rail 28 and the rear latch mechanism 64 and rear slide rail 30, respectively. When the rear release handle 140 is released, the biasing member 94 urges the front and rear latch mechanism 62, 64 back into full engagement with the slide rails 28, 30 to fixedly secure the seat assembly 10 to the floor 20.

The seat assembly 10 may also be pivoted from the seating position, or forwardly folded position, to the tumbled position shown in Figure 3 as follows. The rear release handle 140 is simply further pivoted upwardly to force the release cam member 130 further downwardly along the notch 108. The release cam member 130 engages and pivots the front and rear latch plates 110, 112 outwardly until the hook portions 116, 122 are clear from and spaced outwardly beyond the bulbous portions 40 of the flanges 36 such that the rear latch mechanism 64 is completely disengaged from the rear slide rail 30. As discussed above, the front latch mechanism 62 is also simultaneously disengaged from the front slide rail 28 by the connecting link 150. The seat assembly 10 may now pivot about the pivot pin 68 of the front support plate 66. Once the rear latch mechanism 64 is above the rear slide rail 30, the rear release handle 140 is released and the both front and rear latch mechanisms 62, 64 return to the initial engaged positions. The latch plate 90 of the front latch mechanism 62 maintains engagement with the front slide rail 28 as the seat assembly 10 continues to pivot upwardly and forwardly about the support plate 66. The connecting link 150 travels with the side members 50, 52 of the seat assembly 10 and pivots about the pivot pin 152. The lost motion slot 154 allows the guide pin 146 to travel therein as the connecting link 150 is pivoted with the seat assembly 10 to prevent the latch plate 90 from disengaging with the front slide rail 28. The seat assembly 10 may now be pivoted completely to the tumbled position with assistance by the biasing member 72 and assist member 160, as previously discussed.

The seat assembly 10 may now be completely disengaged from the slide rails 28, 30 for removal from the vehicle. While in the tumbled position, the front release bar 96 may be pivoted upwardly to pivot each of the latch plates 90 about the pivot pins 92 until the latch plate 90 is spaced away from the flange 36 of the front slide rail 28. The rear leg portion 82 of the support plate 66 may now be pulled rearwardly to release the flange 36 from the U-shaped hook opening 84 and completely release the riser assembly 24 from the front slide rail 28 and the seat assembly 10 from the vehicle.

Finally, to reinstall the seat assembly 10 into the vehicle, the support plate 66 is positioned on the front slide rail 28 with the hook opening 84 receiving the flange 36 therein. As the seat assembly 10 is pivoted upwardly and forwardly, the outer edge of the latch plate 90 will engage the front flange 36 and act like a cam to pivot the latch plate 90 open and around the flange 36 to fully engage the front slide rail 28. The seat assembly 10 may then be pivoted downwardly from the tumbled position toward the seating position. The front and rear latch plates 110, 112 of the rear latch mechanism 64 similarly engage the respective flanges 36 on the rear slide rail 30 with the outer edges thereof camming against the flanges 36 until fully engaged with the rear slide rail 30. The seat assembly 10 is now fully engaged with the front and rear slide rails 28, 30 and the seat back 14 may be pivoted to the upright seating position for normal occupant use.

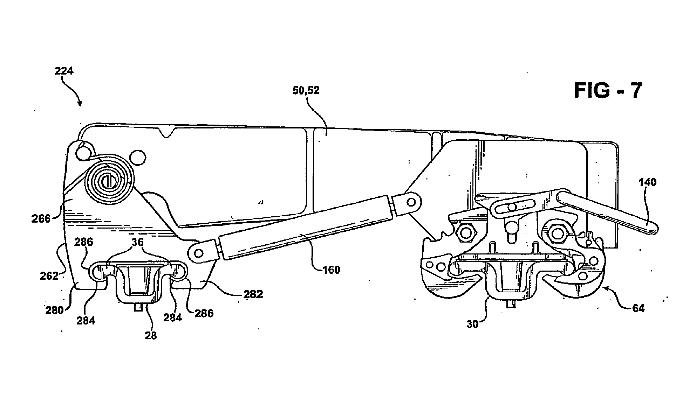

Referring to Figure 7, there is shown a first alternative embodiment of the riser assembly 224 of the present invention. The front latch mechanism 262 allows for tumbling and lateral sliding, or shuttling, of the seat but does not allow for removal of the seat, as with the previously described embodiment. The front latch mechanism 262 of the alternative embodiment comprises a support plate 266 with front and rear leg portions 280, 282 each having U-shaped hook openings 284 for receiving and engaging the opposing flanges 36 of the front slide rail 28. The front latch mechanism 262 does not include a pivotal latch plate for engaging and disengaging with the front flange 36 to release the front latch mechanism 262 from the front slide rail 28. However, each of the U-shaped hook openings 284 include isolators 286 to facilitate lateral sliding movement of the riser assembly 224 along the front slide rail 28. The rear latch mechanism 64 is the same as that described previously with reference to the first embodiment.

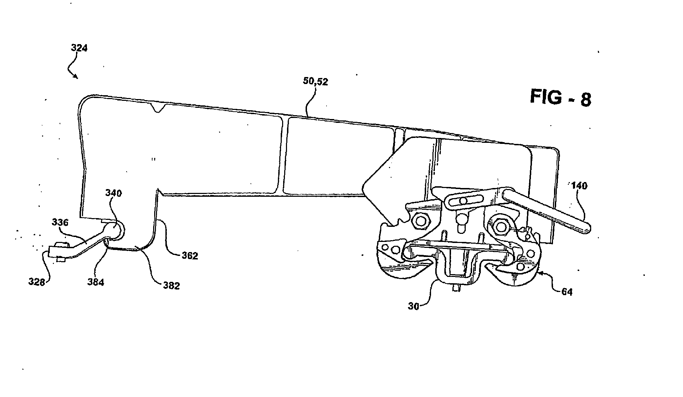

Referring to Figure 8, there is shown a second alternative embodiment of the riser assembly 324 in which the front latch mechanism 362 allows for the riser 324 to slide laterally, or shuttle, and be removed from the front slide rail 328, but does not allow the seat assembly to tumble as described with the previous embodiments. The rear latch mechanism 64 is the same as that disclosed in the previous embodiments. However, the front latch mechanism 362 comprises only a rear leg portion 382 with a U-shaped hook opening 384 that engages a bulbous portion 340 of a flange 336 extending from a front slide rail 328. In this design, there is no pivotal connection with the side members 50, 52 to allow for the tumbling of the seat, as previously described with respect to the previous embodiments. However, the rear latch mechanism 64 is capable of partial disengagement, as previously described, allowing for lateral sliding, or shuttling, of the seat along a the front and rear slide rails 328, 30.

The invention has been described in an illustrative manner, and is to be understood that the terminology which has been used is intended to be in the nature of words of description rather than limitation. Many modifications and variations of the present invention are possible in light of the above teachings. It is therefore to be understood that within the scope of the appended claims, the invention may be practised other than as specifically described.

## Claims

1. A riser assembly (24) for selectively coupling a seat assembly (10) to a front slide rail (28) and rear slide rail (30) on the floor of an automotive vehicle, said riser assembly (24) including:
a front latch mechanism (62) adapted to be operatively coupled to the front slide rail (28), said front latch mechanism (62) having a support plate (66) for supporting said riser assembly (24) on the front slide rail (28), said front latch mechanism (62) having a front latch plate (90) coupled to said support plate (66) for selectively engaging and securing said front latch mechanism (62) to the front slide rail (28);
a rear latch mechanism (64) adapted to be operatively coupled to the rear slide rail (30), said rear latch mechanism (64) having a mounting plate (100) for supporting said riser assembly (24) on the rear slide rail (30);
**characterized by**
said rear latch mechanism (64) having a pair of opposing front (110) and rear (112) latch plates independently pivotally coupled to said mounting plate for selectively engaging and securing said rear latch mechanism (64) to the rear slide rail (30);
a release cam member (130) operatively coupled between said pair of opposing front (110) and rear (112) latch plates for simultaneously engaging and pivotally releasing said pair of opposing front (110) and rear (112) latch plates from engagement with the rear slide rail (30) to selectively couple said rear latch mechanism (64) to the rear slide rail (30);
a connecting link (150) extending between said release cam member (130) and said front latch plate (90) for simultaneously engaging and releasing said front latch plate (90) from engagement with the front slide rail (28) in response to said release cam member engaging and releasing said pair of opposing front and rear latch plates from engagement with the rear slide rail (30); and
a rear release handle (140) operatively coupled to the release cam member for effecting partial disengagement of said rear latch mechanism (64) and said front latch mechanism (62) enabling lateral sliding movement of said seat assembly (10) along said front (28) and rear (30) slide rails.

2. A riser assembly as set forth in claim 1 wherein said rear release handle (140) further effects full disengagement of said rear latch mechanism (64) enabling pivoting of said seat assembly (10) to a tumbled position.

3. A riser assembly as set forth in claim 2 wherein said connecting link (150) has a lost motion connection with at least one of said release cam member (130) and said front latch plate (90) whereby pivoting of said seat assembly (10) to said tumbled position does not effect release of said front latch mechanism (62).

4. A riser assembly as set forth in claim 2 wherein said seat assembly (10) further includes a front release handle (96) operatively coupled to said front latch mechanism (62) for effecting removal of said seat assembly (10) when said seat assembly (10) is in said tumbled position.

5. A riser assembly as set forth in claim 4 wherein said connecting link (150) has a lost motion connection with at least one of said release cam member (130) and said front latch plate (90) whereby pivoting of said seat assembly (10) to said tumbled position does not effect release of said front latch mechanism (62).

## Patentansprüche

1. Kippanordnung (24) zur wahlweisen Kopplung einer Sitzanordnung (10) mit einer vorderen Gleitschiene (28) und einer hinteren Gleitschiene (30) am Boden eines Kraftfahrzeugs, mit:
einem vorderen Verriegelungsmechanismus (62), der dazu ausgelegt ist, in Wirkverbindung mit der vorderen Gleitschiene (28) zu stehen, wobei der vordere Verriegelungsmechanismus (62) ein Stützblech (66) aufweist, um die Kippanordnung (24) auf der vorderen Gleitschiene (28) abzustützen bzw. zu lagern, wobei der vordere Verriegelungsmechanismus (62) ein vorderes Verriegelungsblech (90) aufweist, das mit dem Stützblech (66) gekoppelt ist, um den vorderen Verriegelungsmechanismus (62) wahlweise in die vordere Gleitschiene (28) einzuhaken und an dieser zu befestigen,
einem hinteren Verriegelungsmechanismus (64), der dazu ausgelegt ist, in Wirkverbindung mit der hinteren Gleitschiene (30) zu stehen, wobei der hintere Verriegelungsmechanismus (64) ein Befestigungsblech (100) aufweist, um die Kippanordnung (24) an der hinteren Gleitschiene (30) abzustützen,
**dadurch gekennzeichnet, dass**
der hintere Verriegelungsmechanismus (64) ein Paar gegenüberliegender vorderer (110) und hinterer (112) Verriegelungsbleche aufweist, die unabhängig voneinander schwenkbar mit der Befestigungsplatte gekoppelt sind, um den hinteren Verriegelungsmechanismus (64) wahlweise in die hintere Gleitschiene (30) einzuhaken und an dieser zu befestigen,
einem Entriegelungs-Nockenelement (130), das in Wirkverbindung zwischen das Paar von gegenüberliegenden vorderen (110) und hinteren (112) Verriegelungsblechen gekoppelt ist, um gleichzeitig das Paar von gegenüberliegenden vorderen (110) und hinteren (112) Verriegelungsblechen zu beaufschlagen und dieses schwenkend aus dem Eingriff mit der hinteren Gleitschiene (30) zu lösen, um den hinteren Verriegelungsmechanismus (64) wahlweise mit der hinteren Gleitsschiene (30) zu koppeln,
einem Verbindungsglied (150), das sich zwischen dem Entriegelungs-Nockenelement (130) und dem vorderen Verriegelungsblech (90) erstreckt, um gleichzeitig das vordere Verriegelungsblech (90) zu beaufschlagen und dieses aus dem Eingriff mit der vorderen Gleitschiene (28) in Reaktion auf das Beaufschlagen und das Lösen des Paares von gegenüberliegenden vorderen (110) und hinteren (112) Verriegelungsblechen aus dem Eingriff mit der hinteren Gleitschiene (30) durch das Entriegelungs-Nockenelement zu lösen, und
einem hinteren Entriegelungshebel (140), der in Wirkverbindung mit dem Entriegelungs-Nockenelement steht, um ein teilweises Lösen bzw. Entriegeln des hinteren Verriegelungsmechanismus (64) und des vorderen Verriegelungsmechanismus (62) zu bewirken, wodurch ein seitliches Gleiten der Sitzanordnung (10) entlang der vorderen (28) und hinteren (30) Gleitschiene ermöglicht wird.

2. Kippanordnung nach Anspruch 1, wobei der hintere Entriegelungshebel (140) außerdem ein vollständiges Lösen bzw. Entriegeln des hinteren Verriegelungsmechanismus (64) bewirkt, wodurch ein Schwenken der Sitzanordnung (10) in eine umgeklappte Position ermöglicht wird.

3. Kippanordnung nach Anspruch 2, wobei das Verbindungsglied (150) eine Leerhubverbindung mit mindestens einem Entriegelungs-Nockenelement (130) und dem vorderen Verriegelungsblech (90) aufweist, wodurch ein Schwenken der Sitzanordnung (10) in die umgeklappte Position kein Auslösen bzw. Entriegeln des vorderen Verriegelungsmechanismus (62) bewirkt.

4. Kippanordnung nach Anspruch 2, wobei die Sitzanordnung (10) außerdem einen vorderen Entriegelungshebel (96) umfasst, der in Wirkverbindung mit dem vorderen Verriegelungsmechanismus (62) steht, um ein Entfernen der Sitzanordnung (10) zu bewirken, wenn sich die Sitzanordnung (10) in der umgeklappten Position befindet.

5. Kippanordnung nach Anspruch 4, wobei das Verbindungsglied (150) eine Leerhubverbindung mit mindestens einem Entriegelungs-Nockenelement (130) und einem vorderen Verriegelungsblech (90) aufweist, wodurch ein Schwenken der Sitzanordnung (10) in die umgeklappte Position kein Lösen bzw. Entriegeln des vorderen Verriegelungsmechanismus (62) bewirkt.

## Revendications

1. Ensemble de basculement (24) pour coupler sélectivement un ensemble formant siège (10) à un rail de coulissement avant (28) et à un rail de coulissement arrière (30) sur le plancher d'un véhicule automobile, ledit ensemble de basculement (24) incluant :
un mécanisme à verrou avant (62) adapté à être fonctionnellement couplé au rail de coulissement avant (28), ledit mécanisme à verrou avant (62) ayant une plaque de support (66) pour supporter ledit ensemble de basculement (24) sur le rail de coulissement avant (28), ledit mécanisme à verrou avant (62) ayant une plaque de verrou avant (90) couplée à ladite plaque de support (66) pour engager sélectivement et fixer ledit mécanisme à verrou avant (62) sur le rail de coulissement avant (28) ;
un mécanisme à verrou arrière (62) adapté à être fonctionnellement couplé au rail de coulissement arrière (30), ledit mécanisme à verrou arrière (64) ayant une plaque de montage (100) pour supporter ledit ensemble de basculement (24) sur le rail de coulissement arrière (30) ;
**caractérisé en ce que**
ledit mécanisme à verrou arrière (64) possède une paire de plaques de verrou opposées avant (110) et arrière (112) couplées indépendamment en pivotement sur ladite plaque de montage pour engager sélectivement et fixer ledit mécanisme à verrou arrière (64) sur le rail de coulissement arrière (30) ;
un élément à came de libération (130) fonctionnellement couplé entre ladite paire de plaques de verrou opposées avant (110) et arrière (112) pour simultanément engager et relâcher en pivotement ladite paire de plaques de verrou opposées avant (110) et arrière (112) vis-à-vis de l'engagement avec le rail de coulissement arrière (30) pour coupler sélectivement ledit mécanisme à verrou arrière (64) sur le rail de coulissement arrière (30) ;
un bras de connexion (150) s'étendant entre ledit élément à came de libération (130) et ladite plaque de verrou avant (90) pour simultanément engager et relâcher ladite plaque de verrou avant (90) vis-à-vis de l'engagement avec le rail de coulissement avant (28) en réponse au fait que ledit élément à came de relâchement engage et relâche ladite paire de plaques de verrou opposées avant et arrière vis-à-vis de l'engagement avec le rail de coulissement arrière (30) ; et
une poignée de libération arrière (140) fonctionnellement couplée à l'élément à came de libération pour effectuer un dégagement partiel dudit mécanisme à verrou arrière (64) et dudit mécanisme à verrou avant (62) en permettant un mouvement de coulissement latéral dudit ensemble formant siège (10) le long dudit rail de coulissement avant (28) et dudit rail de coulissement arrière (30).

2. Ensemble de basculement selon la revendication 1, dans lequel ladite poignée de libération arrière (140) effectue en outre un dégagement complet dudit mécanisme à verrou arrière (64) permettant un pivotement dudit ensemble formant siège (10) vers une position escamotée.

3. Ensemble de basculement selon la revendication 2, dans lequel ledit bras de connexion (150) présente une connexion à course morte avec un élément au moins parmi ledit élément à came de libération (130) et ladite plaque de verrou avant (90) grâce à quoi le pivotement dudit ensemble formant siège (10) vers ladite position escamotée ne produit pas de relâchement dudit mécanisme à verrou avant (62).

4. Ensemble de basculement selon la revendication 2, dans lequel ledit ensemble formant siège (10) inclut en outre une poignée de libération avant (96) fonctionnellement couplée audit mécanisme à verrou avant (62) pour effectuer un enlèvement dudit ensemble formant siège (10) quand ledit ensemble formant siège (10) est dans ladite position escamotée.

5. Ensemble de basculement selon la revendication 4, dans lequel ledit bras de connexion (150) présente une connexion à course morte avec un élément au moins parmi ledit élément à came de libération (130) et ladite plaque de verrou avant (90) grâce à quoi le pivotement dudit ensemble formant siège (10) vers ladite position escamotée ne produit pas de relâchement dudit mécanisme de verrou avant (62).
